# EUROPÄISCHE PATENTANMELDUNG

(11) **EP 4 296 291 A1**
(43) Veröffentlichungstag der Anmeldung: **27.12.2023**
(21) Anmeldenummer: 22180238.2
(22) Anmeldetag: 21.06.2022
(51) Int. Cl.: C08G 59/56, C08G 59/62

(54) **LÖSUNG VON POLYPHENOLEN IN AMIN**

(71) Anmelder: Sika Technology AG, 6340 Baar (CH)
(72) Erfinder: KASEMI, Edis, 8046 Zürich (CH); BURCKHARDT, Urs, 8049 Zürich (CH); STADELMANN, Ursula, 8046 Zürich (CH); KRAMER, Andreas, 8008 Zürich (CH)
(74) Vertreter: Sika Patent Attorneys

(57) **Zusammenfassung**

Gegenstand der Erfindung ist eine Lösung umfassend 5 bis 65 Gewichts-% bei Raumtemperatur feste Polyphenole und 35 bis 95 Gewichts-% Amine der Formel (I).

Die erfindungsgemässe Lösung wird bevorzugt verwendet zur Herstellung eines Härters für Epoxidharze. Die Lösung ist niedrigviskos und mit Epoxidharzen gut mischbar und verträglich. Sie ermöglicht insbesondere gut verarbeitbare, emissionsarme Epoxidharz-Beschichtungen mit schneller Aushärtung, hoher Endhärte, fehlerfreier, glänzender Oberfläche und geringer Vergilbung, welche auch ohne oder mit nur wenig Verdünnern in der Kälte störungsfrei zu Beschichtungen von hoher Qualität und Robustheit aushärten.

## Beschreibung

### Technisches Gebiet

Die Erfindung betrifft Lösungen von Polyphenolen in Aminen, ihre Verwendung zur Herstellung von Härtern für Epoxidharze und Raumtemperatur-härtende Epoxidharz-Zusammensetzungen daraus.

### Stand der Technik

Raumtemperatur-härtende Polymerzusammensetzungen auf Epoxidharz-Basis sind im Bauwesen weit verbreitet. Sie bestehen aus flüssigen Harz- und Härterkomponenten, welche vor der Applikation gemischt werden und bei Umgebungstemperaturen zu einem hochfesten und beständigen Material aushärten. Bei kühlen Umgebungsbedingungen, etwa im Temperaturbereich von 15 bis gegen 0 °C, härten solche Systeme aber oft nur langsam aus und entwickeln auch bei nachträglicher Erwärmung nicht mehr die gewünschte Endhärte. Zudem neigen sie zu Oberflächenstörungen wie Trübungen, Flecken, Rauheit oder Klebrigkeit, was auch als "Blushing" bezeichnet wird und insbesondere bei erhöhter Luftfeuchtigkeit auftritt. Vor allem in Beschichtungsanwendungen, wo eine hohe Oberflächenqualität und Härte entscheidend ist, sind diese Nachteile sehr unerwünscht und führen oft zu aufwändiger Nacharbeit. Mit der Verwendung von üblichen Beschleunigern wie 2,4,6-Tris(dimethylaminomethyl)phenol lässt sich die Problematik meist nur teilweise oder gar nicht lösen.

Gut bekannt als Beschleuniger sind auch Phenolverbindungen, insbesondere für eine schnelle Aushärtung bei tiefen Temperaturen. Übliche flüssige Phenolverbindungen wie Phenol selber, tert.Butylphenol oder Nonylphenol sind aber Stoffe von hoher Toxizität und deshalb seit einiger Zeit kaum mehr einsetzbar in Epoxidharz-Produkten. Ebenfalls bekannt ist Cardanol, ein mit einer C₁₅-Kohlenwasserstoffkette substituiertes Phenol, welches aus den Schalen von Cashewnüssen gewonnen wird. Die beschleunigende Wirkung von Cardanol ist aber gering, es ist in höheren Mengen schlecht verträglich mit Epoxidharzen und es hat einen unerwünscht senkenden Effekt auf die Glasumwandlungstemperatur der ausgehärteten Produkte. Weiterhin bekannt als Beschleuniger sind Polyphenole, insbesondere sogenannte Phenolharze, insbesondere solche aus der Polymerisation von Phenol mit Formaldehyd. Polyphenole sind aber typischerweise fest bei Raumtemperatur, schwer löslich und als Lösung in üblichen Aminhärtern meist hochviskos. Eine Verdünnung mit Lösemitteln wie Xylol ist insofern nachteilig, als dadurch unerwünscht hohe Emissionen entstehen.

US 6,649,729 beschreibt die Verwendung von Phenolharzen in Epoxidharz-Produkten mit üblichen Aminhärtern wie Isophorondiamin (IPDA) oder Diethylentriamin zur Beschleunigung der Aushärtung und Verminderung von Blushing. US 2010/0210758 beschreibt die Verwendung hoher Mengen an Phenolharz in Epoxidharz-Beschichtungen mit Aminhärtern wie 1,3-Bis(aminomethyl)benzol (MXDA) oder Trimethylhexandiamin (TMD) zur Beschleunigung der Aushärtung und Erhöhung der Chemikalienbeständigkeit.

Alkylierte Amine wie N-Benzyl-1,2-ethandiamin sind bekannt als Härter für Epoxidharze, beispielsweise aus WO 2020/070082. Sie ermöglichen auch bei kalten Temperaturen Epoxidharze-Beschichtungen mit schönen Oberflächen, wobei deren Endhärte nach Aushärtung in der Kälte tendenziell tiefer ist als nach Aushärtung bei Raumtemperatur.

### Darstellung der Erfindung

Aufgabe der vorliegenden Erfindung ist es, einen bei Raumtemperatur flüssigen Beschleuniger für die Aushärtung von Epoxidharzen zur Verfügung zu stellen, welcher eine hohe Wirkung als Beschleuniger zeigt, niedrigviskos und mit Epoxidharzen gut mischbar und verträglich ist und bei kalten Umgebungsbedingungen eine störungsfreie und vollständige Aushärtung gewährleistet. Überraschenderweise wird diese Aufgabe mit einer Lösung umfassend 5 bis 65 Gewichts-% bei Raumtemperatur feste Polyphenole und 35 bis 95 Gewichts-% Amine der Formel (I), wie in Anspruch 1 beschrieben, gelöst. Das Amin der Formel (I) vermag überraschend hohe Mengen an Polyphenolen bei gut handhabbarer Viskosität zu lösen. Die erfindungsgemässe Lösung wird besonders vorteilhaft verwendet zur Herstellung eines Härters für Epoxidharze. Mit der erfindungsgemässen Lösung können dabei auf einfache Weise Härter mit einem gut einstellbaren Polyphenol-Gehalt hergestellt werden, die besonders niedrigviskos und mit Epoxidharzen ausgezeichnet mischbar und verträglich sind. Besonders überraschend ist dabei der Umstand, dass diese Härter Epoxidharz-Produkte mit besonders störungsfreier Aushärtung in der Kälte und besonders hohen Endhärten ermöglichen. Insbesondere ermöglichen sie Epoxidharz-Beschichtungen mit überraschend hoher Härte nach 7 Tagen Aushärtung in der Kälte (8°C/80 % relative Feuchte) gefolgt von 14 Tagen Aushärtung im Normklima, welche sehr nahe an der nach 14 Tagen Aushärtung im Normklima erhaltenen Härte liegt. Bevorzugt erreicht die Härte, gemessen als Königshärte, dabei mindestens 70 %, besonders bevorzugt mindestens 80 %, insbesondere mindestens 90 %, des Wertes nach Aushärtung im Normklima. Dabei wird diese Aushärtung in der Kälte bereits mit überraschend wenig der erfindungsgemässen Lösung erreicht, wodurch die Verarbeitbarkeit solcher Beschichtungen auch ohne oder mit wenig Verdünner sehr gut ist und diese somit besonders emissionsarm sind.

Die im Stand der Technik als Härter für Epoxidharze üblichen Amine, wie beispielsweise IPDA oder MXDA, sind zur Herstellung einer Polyphenol-Lösung deutlich weniger gut geeignet. Mit gewissen Polyphenolen wie zum Beispiel Diphenolsäure werden damit sehr hochviskose bis pastöse und/oder mit Epoxidharzen unverträgliche Lösungen erhalten. Mit weiteren Polyphenolen wie insbesondere Phenol-Formaldehyd-Novolaken werden teilweise zwar ähnlich niedrigviskose und verträgliche Lösungen erhalten, die eine beschleunigte Aushärtung von Epoxidharzen ermöglichen, damit ausgehärtete Beschichtungen zeigen aber bei Aushärtung in der Kälte eine stark reduzierte Endhärte, wodurch die Robustheit der Beschichtung eingeschränkt ist oder aufwändige Nacharbeiten notwendig sind.

Die erfindungsgemässe Lösung ermöglicht gut verarbeitbare, emissionsarme Epoxidharz-Beschichtungen mit schneller Aushärtung, hoher Endhärte, fehlerfreier, glänzender Oberfläche und geringer Vergilbung, welche auch ohne oder mit nur wenig Verdünnern wie Benzylalkohol in der Kälte, insbesondere bei Temperaturen von 5 bis 8 °C, überraschend störungsfrei zu Beschichtungen von hoher Qualität und Robustheit aushärten.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Lösung umfassend 5 bis 65 Gewichts-% bei Raumtemperatur feste Polyphenole und 35 bis 95 Gewichts-% Amine der Formel (I),

R-NH-A-NH₂ (I)

wobei
A für einen linearen oder verzweigten Alkylenrest mit 2 bis 10 C-Atomen steht und R für einen einwertigen, gegebenenfalls ein Sauerstoffatom enthaltenden Kohlenwasserstoffrest mit 1 bis 12 C-Atomen steht,
wobei das Amin der Formel (I) insgesamt 8 bis 15 C-Atome aufweist und die beiden Stickstoffatome durch mindestens zwei C-Atome voneinander getrennt sind.

Als "Lösung" wird eine klare, homogene Flüssigkeit mit darin vollständig gelösten Bestandteilen bezeichnet.

Als "Polyphenol" wird eine Verbindung mit zwei oder mehr Phenolgruppen (= phenolische OH-Gruppen) bezeichnet.

Als "Phenolharz" wird ein Polymer mit Phenolgruppen-haltigen Repetiereinheiten bezeichnet.

Als "Aminwasserstoff" werden die Wasserstoffatome von primären und sekundären Aminogruppen bezeichnet.

Als "Aminwasserstoff-Equivalentgewicht" wird die Masse eines Amins oder einer Amin-haltigen Zusammensetzung, die ein Molequivalent Aminwasserstoff enthält, bezeichnet. Es wird angegeben in der Masseinheit "g/eq".

Als "Epoxid-Equivalentgewicht" wird die Masse einer Epoxidgruppen-haltigen Verbindung oder Zusammensetzung bezeichnet, die ein Mol-Equivalent Epoxidgruppen enthält. Es wird angegeben in der Masseinheit "g/eq".

Mit "Poly" beginnende Substanznamen wie Polyamin oder Polyepoxid bezeichnen Substanzen, die formal zwei oder mehr der in ihrem Namen vorkommenden funktionellen Gruppen pro Molekül enthalten.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Verdünner" wird eine in einem Epoxidharz lösliche und dessen Viskosität senkende Substanz bezeichnet, welche bei der Aushärtung chemisch nicht in das Epoxidharz-Polymer eingebunden wird.

Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.

Eine gestrichelte Linie in den Formeln in diesem Dokument stellt jeweils die Bindung zwischen einem Substituenten und dem zugehörigen Molekülrest dar. Als "Topfzeit" wird die maximale Zeitspanne ab dem Mischen der Komponenten und der Applikation einer Epoxidharz-Zusammensetzung bezeichnet, in der die vermischte Zusammensetzung in einem ausreichend fliessfähigen Zustand ist und die Substratoberflächen gut benetzen kann.

Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen, sofern nicht anders angegeben.

Gewichtsprozente (Gewichts-%) bezeichnen Massenanteile eines Bestandteils einer Zusammensetzung bezogen auf die gesamte Zusammensetzung, falls nichts anderes angegeben ist. Die Begriffe "Masse" und "Gewicht" werden im vorliegenden Dokument synonym benutzt.

Bevorzugt sind Polyphenole mit einem Schmelz- oder Erweichungspunkt von mindestens 50 °C.

Bevorzugt als Polyphenol sind bei Raumtemperatur feste Verbindungen mit 2 bis 10 Phenolgruppen, sowie bei Raumtemperatur feste Phenolgruppen-haltige Polymere, welche insbesondere im Mittel 3 bis 100, bevorzugt 3 bis 50, Phenolgruppen enthalten.

Geeignete bei Raumtemperatur feste Verbindungen mit 2 bis 10 Phenolgruppen sind insbesondere Brenzcatechin (1,2-Dihydroxyphenol), Resorcin (1,3-Dihydroxyphenol), Hydrochinon (1,4-Dihydroxyphenol), die isomeren Dihydroxybenzoesäuren, Gallussäure (3,4,5-Trihydroxybenzoesäure), Bisphenol A (2,2-Bis(4-hydroxyphenyl)propan), Bisphenol F (Bis(4-hydroxyphenyl)methan), Bisphenol E (1,1-Bis(4-hydroxyphenyl)ethan), Bisphenol B (2,2-Bis(4-hydroxyphenyl)butan), Bisphenol Z (1,1-Bis(4-hydroxyphenyl)cyclohexan), Diphenolsäure (4,4-Bis(4-hydroxyphenyl)valeriansäure), sowie Abbauprodukte von Lignin wie insbesondere Resveratrol (3,5,4'-Trihydroxystilben), Malvidin (3,4',5,7-Tetrahydroxy-3',5'-dimethoxyflavylium) oder Catechin (2-(3,4-Dihydroxyphenyl)chroman-3,5,7-triol).

Bevorzugt ist das bei Raumtemperatur feste Polyphenol ausgewählt aus der Gruppe bestehend aus Gallussäure, Diphenolsäure, Resveratrol, Catechin und Phenolgruppen-haltigen Polymeren, insbesondere Phenolharzen.

Besonders bevorzugt ist Diphenolsäure. Dieses Polyphenol ist in einem einfachen Verfahren aus nachwachsenden Rohstoffen zugänglich, in hoher Menge im Amin der Formel (I) löslich und ermöglicht gut verarbeitbare Epoxidharz-Beschichtungen mit schneller Aushärtung, hoher Endhärte und schönen Oberflächen.

Weiterhin besonders bevorzugt als Polyphenol sind bei Raumtemperatur feste Phenolgruppen-haltige Polymere, insbesondere sogenannte Phenolharze. Bevorzugt enthält das Phenolharz Repetiereinheiten aus der Polymerisation von Phenol, Kresol, Xylenol und/oder Cardanol mit einem Aldehyd, insbesondere Formaldehyd.

Bevorzugt sind bei Raumtemperatur feste Phenolharze abgeleitet von Phenol (Hydroxybenzol), m-Kresol oder Cardanol, insbesondere Phenol.

Insbesondere ist das bei Raumtemperatur feste Polyphenol ein Phenol-Formaldehyd-Novolak oder ein Cardanol-enthaltendes Phenol-Formaldehyd-Novolak, besonders bevorzugt ein Phenol-Formaldehyd-Novolak.

Bevorzugt ist das bei Raumtemperatur feste Polyphenol ein Phenolharz der Formel (II), 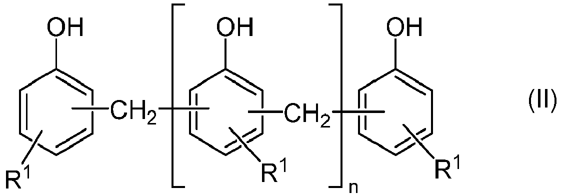 wobei
n im Mittel für einen Wert von 1 bis 45, bevorzugt 1 bis 25, insbesondere 1 bis 10, steht, und
R¹ unabhängig voneinander für H oder einen aliphatischen Kohlenwasserstoffrest mit 1 bis 15 C-Atomen steht, bevorzugt für H, Methyl oder einen linearen aliphatischen C₁₅-Kohlenwasserstoffrest mit keiner, einer, zwei oder drei Doppelbindungen.

Ein Phenolharz der Formel (II) wird insbesondere erhalten aus der Polymerisation von mindestens einer Phenolverbindung der Formel 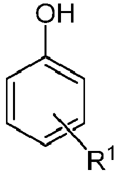 mit Formaldehyd unter Freisetzung von Wasser. Bevorzugt wird Formaldehyd in Form von Paraformaldehyd eingesetzt. Bevorzugt werden die flüchtigen Anteile nach der Polymerisation soweit entfernt, dass der Gehalt an freiem Phenol (R¹=H) im Phenolharz weniger als 1 Gewichts-% und der Gehalt an Formaldehyd weniger als 0.1 Gewichts-% beträgt.

Bevorzugt stehen die -CH₂- Einheiten in Formel (II) in ortho- oder para-Stellung zur Phenolgruppe.

Bevorzugt steht ein R¹, welches nicht für H steht, in meta-Stellung zur Phenolgruppe.

Für den Fall, dass R¹ für einen linearen aliphatischen C₁₅-Kohlenwasserstoffrest mit keiner, einer, zwei oder drei Doppelbindungen steht, ist dieser Rest bevorzugt abgeleitet von Cardanol.

Als "Cardanol" wird ein aus dem Öl der Cashewnussschale gewonnenes Alkenylphenol-Gemisch der Formel 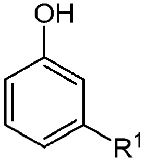 bezeichnet, bei welchem R¹ für einen linearen aliphatischen C₁₅H₃₁- oder C₁₅H₂₉- oder C₁₅H₂₇- oder C₁₅H₂₅-Kohlenwasserstoffrest steht, insbesondere für die Reste der Formeln 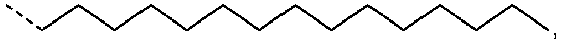 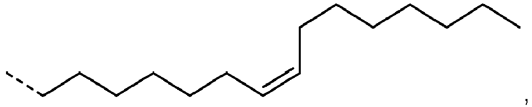 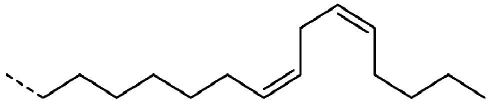 oder

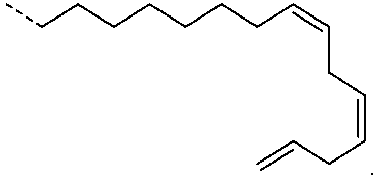

Bevorzugt stehen in Formel (II) alle Reste R¹ für H, oder mindestens die Hälfte der Reste R¹ für H und die weiteren Reste R¹ sind abgeleitet von Cardanol.

Am meisten bevorzugt sind Phenolharze, bei welchen alle Reste R¹ für H stehen. Ein solches Phenolharz wird auch als Phenol-Formaldehyd-Novolak bezeichnet.

Bevorzugt sind Phenolharze der Formel (II) mit einem mittleren Molekulargewicht Mₙ von 300 bis 5'000 g/mol, bevorzugt 350 bis 3'000 g/mol, insbesondere 400 bis 1'500 g/mol.

Bevorzugt sind Phenolharze der Formel (II) mit einer Erweichungstemperatur von 55 bis 140 °C, insbesondere 60 bis 120 °C.

Die bevorzugten Polyphenole können in besonders hoher Menge im Amin der Formel (I) gelöst werden und die damit erhaltenen Lösungen ermöglichen Epoxidharz-Beschichtungen mit besonders störungsfreier Aushärtung in der Kälte.

Die erfindungsgemässe Lösung umfasst weiterhin mindestens ein Amin der Formel (I),

R-NH-A-NH₂ (I)

wobei
A für einen linearen oder verzweigten Alkylenrest mit 2 bis 10 C-Atomen steht und R für einen einwertigen, gegebenenfalls ein Sauerstoffatom enthaltenden Kohlenwasserstoffrest mit 1 bis 12 C-Atomen steht,
wobei das Amin der Formel (I) insgesamt 8 bis 15 C-Atome aufweist und die beiden Stickstoffatome durch mindestens zwei C-Atome voneinander getrennt sind.

Bevorzugt ist A ausgewählt aus der Gruppe bestehend aus 1,2-Ethylen, 1,2-Propylen, 1,3-Propylen, 1,4-Butylen, 1,3-Butylen, 2-Methyl-1,2-propylen, 1,3-Pentylen, 1,5-Pentylen, 2,2-Dimethyl-1,3-propylen, 1,6-Hexylen, 2-Methyl-1,5-pentylen, 1,7-Heptylen, 1,8-Octylen, 2,5-Dimethyl-1,6-hexylen, 1,9-Nonylen und 1,10-Decylen.

Davon bevorzugt sind 1,2-Ethylen, 1,2-Propylen 1,3-Propylen, 1,4-Butylen, 1,5-Pentylen, 1,6-Hexylen, insbesondere 1,2-Ethylen oder 1,2-Propylen.

Am meisten bevorzugt ist 1,2-Ethylen.

Bevorzugt enthält R mindestens einen aromatischen oder aliphatischen Ring, insbesondere mindestens einen aromatischen Ring.

Insbesondere ist R ausgewählt aus der Gruppe bestehend aus Benzyl, Furfuryl, 2-Phenylethyl, Cyclohexylmethyl und Tetrahydrofurfuryl.

Davon bevorzugt sind Benzyl oder Furfuryl, insbesondere Benzyl.

Besonders bevorzugt als Amin der Formel (I) ist N-Benzyl-1,2-ethandiamin, N-Benzyl-1,2-propandiamin, N-Furfuryl-1,2-ethandiamin, N-Tetrahydrofurfuryl-1,2-ethandiamin, insbesondere N-Benzyl-1,2-ethandiamin, N-Furfuryl-1,2-ethandiamin oder N-Tetrahydrofurfuryl-1,2-ethandiamin.

Am meisten bevorzugt als Amin der Formel (I) ist N-Benzyl-1,2-ethandiamin.

In den bevorzugten Aminen der Formel (I) können besonders hohe Mengen Polyphenol gelöst werden und die erhaltenen Lösungen ermöglichen Epoxidharz-Beschichtungen besonders störungsfreier Aushärtung in der Kälte.

Bevorzugt umfasst die erfindungsgemässe Lösung 10 bis 50 Gewichts-%, insbesondere 20 bis 45 Gewichts-%, Polyphenole. Eine solche Lösung verfügt über eine gut handhabbare Viskosität und eine gute Mischbarkeit bzw. Verträglichkeit mit Epoxidharzen.

Bevorzugt umfasst die erfindungsgemässe Lösung 50 bis 90 Gewichts-%, insbesondere 55 bis 80 Gewichts-%, Amine der Formel (I). Eine solche Lösung verfügt über eine gut handhabbare Viskosität und einen hohen Gehalt an Phenolgruppen.

Bevorzugt liegt das Gewichtsverhältnis zwischen Polyphenolen und Aminen der Formel (I) in der erfindungsgemässen Lösung im Bereich von 5/95 bis 65/35, besonders bevorzugt 10/90 bis 50/50, insbesondere 20/80 bis 45/55.

Gegebenenfalls enthält die erfindungsgemässe Lösung weitere Bestandteile.

Eine bevorzugte Lösung enthält
- 5 bis 65 Gewichts-%, bevorzugt 10 bis 50 Gewichts-%, insbesondere 20 bis 45 Gewichts-%, bei Raumtemperatur feste Polyphenole,
- 35 bis 95 Gewichts-%, insbesondere 50 bis 90 Gewichts-%, Amine der Formel (I), und
- 0 bis 30 Gewichts-% weitere Amine, welche nicht der Formel (I) entsprechen, und/oder Verdünner und/oder Beschleuniger.

In einer bevorzugten Ausführungsform enthält die Lösung als weiteren Bestandteil mindestens ein Amin der Formel (la) und/oder ein Amin der Formel (Ib),

R-NH-A-NH-R (la)

NH₂-A-NH₂ (Ib)

wobei A und R die bereits genannten Bedeutungen aufweisen und jeweils für
den gleichen Rest wie im entsprechenden Amin der Formel (I) stehen, und/oder aminfunktionelle Addukte des Amins der Formel (I) mit mindestens einem Mono- oder Polyepoxid.

Das Amin der Formel (la) entspricht dabei dem N,N'-dialkylierten Amin des entsprechenden monoalkylierten Amins der Formel (I), und das Amin der Formel (Ib) entspricht dem entsprechenden nicht alkylierten Amin. Ein solches Amingemisch ist insbesondere das Reaktionsprodukt einer reduktiven Alkylierung des Amins der Formel (Ib) mit einer unterstöchiometrischen Menge eines Aldehyds oder Ketons, insbesondere Benzaldehyd oder Furfural, und Wasserstoff.

Bevorzugt wird das nicht umgesetzte Amin der Formel (Ib) nach der Alkylierung weitgehend aus dem Reaktionsgemisch entfernt, insbesondere mittels Destillation, wobei ein Amingemisch enthaltend das Amin der Formel (I) und das entsprechende Amin der Formel (la) erhalten wird.

In einer bevorzugten Ausführungsform der Erfindung wird das Amin der Formel (I) in einer Reinheit von > 95 % zum Lösen des Polyphenols eingesetzt. Die erfindungsgemässe Lösung ist dann weitgehend frei von Aminen der Formel (la) und (Ib).

In einer weiteren bevorzugten Ausführungsform der Erfindung wird das Amin der Formel (I) als Mischung mit den entsprechenden Aminen der Formel (la) und (Ib) eingesetzt, wobei das Gewichtsverhältnis zwischen Amin der Formel (I) und dem Amin der Formel (la) bevorzugt im Bereich von 70/30 bis 90/10 liegt und der Gehalt an Amin der Formel (Ib) bevorzugt weniger als 1 Gewichts-% bezogen auf die Summe aus Amin der Formel (I) und (la) beträgt. Ein solches Amingemisch ist besonders kostengünstig herstellbar und ebenso geeignet zum Lösen des Polyphenols wie ein höher gereinigtes Amin der Formel (I).

Die erfindungsgemässe Lösung kann weiterhin aminfunktionelle Addukte des Amins der Formel (I) mit mindestens einem Mono- oder Polyepoxid enthalten. Als Monoepoxid geeignet ist insbesondere Kresylglycidylether. Bevorzugt sind Addukte mit mindestens einem Polyepoxid, insbesondere einem Bisphenol A- oder Bisphenol F-Diglycidylether oder einem Phenol-Novolak-Glycidylether mit einer mittleren Funktionalität von 2.3 bis 4. Am meisten bevorzugt sind aminfunktionelle Addukte des Amins der Formel (I) mit einem Bisphenol A-Diglycidylether.

Weitere Bestandteile, welche die erfindungsgemässe Lösung enthalten kann, sind inbesondere
- Beschleuniger wie insbesondere 3-(3-Dimethylaminopropylamino)propylamin (DMAPAPA), 2,4,6-Tris(dimethylaminomethyl)phenol, Salicylsäure, Calciumnitrat und/oder Wasser, oder
- Verdünner wie insbesondere Benzylalkohol, styrolisiertes Phenol, ethoxyliertes Phenol, bei Raumtemperatur flüssige phenolgruppenhaltige aromatische Kohlenwasserstoffharze wie insbesondere die Novares^{®}-Typen LS 500, LX 200, LA 300 oder LA 700 (von Rütgers), Diisopropylnaphthalin, Diisopropylbiphenyl, Isopropylbiphenyl oder Cardanol, insbesondere Benzylalkohol.

Bevorzugt enthält die erfindungsgemässe Lösung einen Gehalt an freiem Phenol (Hydroxybenzol) von weniger als 0.5 Gewichts-%, bevorzugt weniger als 0.2 Gewichts-%, insbesondere weniger als 0.1 Gewichts-%, bezogen auf die gesamte Lösung. Eine solche Lösung ist toxikologisch besonders vorteilhaft.

Bevorzugt weist die erfindungsgemässe Lösung eine Viskosität bei 20 °C im Bereich von 0.01 bis 100 Pa·s, mehr bevorzugt 0.02 bis 50 Pa·s, besonders bevorzugt 0.03 bis 20 Pa·s, insbesondere 0.05 bis 10 Pa·s, auf.

Die erfindungsgemässe Lösung ist besonders geeignet zur Herstellung eines Härters für Epoxidharze. Mit der erfindungsgemässen Lösung kann der Härter schnell und einfach hergestellt und dabei der Polyphenol-Gehalt gut eingestellt werden. Die mit der Lösung erhaltenen Härter sind mit Epoxidharzen ausgezeichnet mischbar und verträglich und ermöglichen gut verarbeitbare, emissionsarme Epoxidharz-Beschichtungen mit schneller Aushärtung, hoher Endhärte, fehlerfreier, glänzender Oberfläche, geringer Vergilbung und besonders störungsfreier Aushärtung in der Kälte.

Ein weiterer Gegenstand der Erfindung ist somit die Verwendung der beschriebenen Lösung zur Herstellung eines Härters für Epoxidharze, wobei der Härter mindestens ein weiteres Amin mit mindestens drei Aminwasserstoffen enthält.

Bevorzugt ist das weitere Amin mit mindestens drei Aminwasserstoffen ausgewählt aus der Gruppe bestehend aus Aminen der Formel (I), 1,5-Diamino-2-methylpentan (MPMD), 2-Butyl-2-ethyl-1,5-pentandiamin (C11-Neodiamin), 2,2(4),4-Trimethyl-1,6-hexandiamin (TMD), 1,2-Diaminocyclohexan, 1,3-Bis-(aminomethyl)cyclohexan, 1,4-Bis(aminomethyl)cyclohexan, Bis(4-aminocyclohexyl)methan, Isophorondiamin (IPDA), 2(4)-Methyl-1,3-diaminocyclohexan, 2,5(2,6)-Bis(aminomethyl)bicyclo[2.2.1]heptan (NBDA), 1,3-Bis(aminomethyl)-benzol (MXDA), Diethylentriamin (DETA), Triethylentetramin (TETA), Tetraethylenpentamin (TEPA), Dipropylentriamin (DPTA), N-(2-Aminoethyl)-1,3-propandiamin (N3-Amin), N,N'-Bis(3-aminopropyl)ethylendiamin (N4-Amin), Bis(hexamethylen)triamin (BHMT), Polyoxypropylendiaminen mit mittlerem Molekulargewicht Mₙ im Bereich von 200 bis 500 g/mol, Polyoxypropylentriaminen mit mittlerem Molekulargewicht Mₙ im Bereich von 300 bis 500 g/mol, 3-(3-(Dimethylamino)-propylamino)propylamin (DMAPAPA), 2,5-Bis(aminomethyl)furan, 2,5-Bis(aminomethyl)tetrahydrofuran, Bis(5-aminomethylfuran-2-yl)methan, Bis(5-aminomethyltetrahydrofuran-2-yl)methan, 2,2-Bis(5-aminomethylfuran-2-yl)propan, 2,2-Bis(5-aminomethyltetrahydrofuran-2-yl)propan, aminfunktionellen Addukten der genannten Amine mit Mono- oder Polyepoxiden, Phenalkaminen und Mischungen aus zwei oder mehr der genannten Amine.

Als Mono- oder Polyepoxid für aminfunktionelle Addukte bevorzugt sind Kresylglycidylether und insbesondere Bisphenol A-Diglycidylether oder Phenol-Novolak-Glycidylether mit einer mittleren Funktionalität von 2.3 bis 4. Bevorzugt sind aminfunktionelle Addukte mit Bisphenol A-Diglycidylether.

Als Phenalkamin bevorzugt sind Umsetzungsprodukte von Cardanol mit Formaldehyd und Aminen wie insbesondere DETA, TETA oder MXDA.

Besonders bevorzugt als weitere Amine mit mindestens drei Aminwasserstoffen sind Amine der Formel (I), insbesondere N-Benzyl-1,2-ethandiamin, N-Furfuryl-1,2-ethandiamin oder N-Tetrahydrofurfuryl-1,2-ethandiamin, sowie IPDA, MXDA, 1,3-Bis(aminomethyl)cyclohexan, TETA, TEPA, N4-Amin, DMAPAPA oder Addukte dieser Amine mit Bisphenol A-Diglycidylether.

Bevorzugt enthält der Härter weitere Bestandteile, insbesondere Beschleuniger und/oder Verdünner.

Geeignete Beschleuniger sind insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; Nitrate wie insbesondere Calciumnitrat; tertiäre Amine wie insbesondere 1,4-Diazabicyclo[2.2.2]octan, Benzyldimethylamin, α-Methylbenzyldimethylamin, Triethanolamin, Dimethylaminopropylamin, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyltrimethylammoniumchlorid, Amidine wie insbesondere 1,8-Diazabicyclo[5.4.0]-undec-7-en, Guanidine wie insbesondere 1,1,3,3-Tetramethylguanidin, Phenolgruppen-haltige Verbindungen, insbesondere Mannich-Basen wie insbesondere 2-(Dimethylaminomethyl)phenol oder 2,4,6-Tris(dimethylaminomethyl)phenol, Phosphite wie insbesondere Di- oder Triphenylphosphite, oder Mercaptogruppen aufweisende Verbindungen.

Bevorzugt sind Säuren, Nitrate, tertiäre Amine oder Mannich-Basen, insbesondere Salicylsäure, Calciumnitrat oder 2,4,6-Tris(dimethylaminomethyl)phenol, oder eine Kombination dieser Beschleuniger.

Geeignete Verdünner sind insbesondere n-Propanol, Isopropanol, n-Butanol, Isobutanol, tert.Butanol, 1-Pentanol, 2-Pentanol, 3-Pentanol, 2-Methyl-1-butanol, 3-Methyl-1-butanol, 3-Methyl-2-butanol n-Hexanol, 2-Ethylhexanol, Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykolmonomethylether, Diethylenglykolmonoethylether, Diethylenglykolmono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, 2,2,4-Trimethyl-1,3-pentandiolmonoisobutyrat, Diphenylmethan, Diisopropylnaphthalin, Diisopropylbiphenyl, Isopropylbiphenyl, Erdölfraktionen wie zum Beispiel Solvesso^{®}-Typen (von Exxon), Alkylphenole wie tert.Butylphenol, Nonylphenol, Dodecylphenol, Cardanol, styrolisiertes Phenol, Bisphenole, aromatische Kohlenwasserstoffharze, insbesondere Phenolgruppenhaltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide.

Davon bevorzugt sind Verdünner mit einem Siedepunkt von mehr als 200 °C, insbesondere Benzylalkohol, styrolisiertes Phenol, ethoxyliertes Phenol, phenolgruppenhaltige aromatische Kohlenwasserstoffharze wie insbesondere die Novares^{®}-Typen LS 500, LX 200, LA 300 oder LA 700 (von Rütgers), Diisopropylnaphthalin, Diisopropylbiphenyl, Isopropylbiphenyl oder Cardanol, insbesondere Benzylalkohol.

Bevorzugt enthält der Härter nur einen geringen Gehalt an Verdünnern, insbesondere 0 bis 30 Gewichts-%, besonders bevorzugt 0 bis 20 Gewichts-%, Verdünner bezogen auf den gesamten Härter. Dies ermöglicht besonders emissionsarme Epoxidharz-Produkte.

Der Härter kann wasserbasiert sein und Wasser im Bereich von 15 bis 90 Gewichts-%, bevorzugt 20 bis 80 Gewichts-%, enthalten.

Bevorzugt ist der Härter nicht wasserbasiert. Er enthält bevorzugt weniger als 15 Gewichts-%, insbesondere weniger als 10 Gewichts-%, Wasser, bezogen auf den gesamten Härter. Ein solcher Härter ist besonders geeignet für nicht-wässrige Epoxidharz-Produkte.

Der Härter kann weitere Bestandteile enthalten, insbesondere:
- zusätzliche Amine der Formel (I),
- weitere Addukte, insbesondere Addukte von MPMD oder 1,2-Ethandiamin oder 1,2-Propandiamin mit Kresylglycidylether oder aromatischen Epoxidharzen, bei welchen nicht umgesetztes MPMD, 1,2-Ethandiamin oder 1,2-Propandiamin nach der Umsetzung destillativ entfernt wurde,
- Monoamine wie insbesondere Benzylamin oder Furfurylamin,
- Polyamidoamine, insbesondere Umsetzungsprodukte aus einer ein- oder mehrwertigen Carbonsäure oder deren Ester oder Anhydrid, insbesondere einer Dimerfettsäure, mit einem im stöchiometrischen Überschuss eingesetzten Polyamin, insbesondere DETA oder TETA,
- Mannich-Basen,
- aromatische Polyamine wie insbesondere 4,4'-, 2,4' und/oder 2,2'-Diaminodiphenylmethan, 2,4(6)-Toluoldiamin, 3,5-Dimethylthio-2,4(6)-toluoldiamin oder 3,5-Diethyl-2,4(6)-toluylendiamin,
- Mercaptogruppen aufweisende Verbindungen, insbesondere flüssige Mercaptan-terminierte Polysulfidpolymere, Mercaptan-terminierte Polyoxyalkylenether, Mercaptan-terminierte Polyoxyalkylen-Derivate, Polyester von Thiocarbonsäuren, 2,4,6-Trimercapto-1,3,5-triazin, Triethylenglykoldimercaptan oder Ethandithiol,
- oberflächenaktive Additive, insbesondere Entschäumer, Entlüfter, Netzmittel, Dispergiermittel oder Verlaufsmittel, oder
- Stabilisatoren, insbesondere Stabilisatoren gegen Oxidation, Wärme, Licht oder UV-Strahlung.

Bevorzugt enthält der Härter 2 bis 30 Gewichts-%, bevorzugt 5 bis 25 Gewichts-%, bei Raumtemperatur feste Polyphenole bezogen auf die Summe aller im Härter enthaltenen flüssigen oder gelösten Bestandteile. Ein solcher Härter ermöglicht gut verarbeitbare Epoxidharz-Beschichtungen mit besonders störungsfreier Aushärtung in der Kälte. Für den Fall, dass der Härter Pigmente, Russ oder mineralische Füllstoffe enthält, werden diese somit für die Berechnung des Gehaltes an Polyphenol nicht miteinbezogen.

Bevorzugt weist der Härter bezogen auf die Summe aller im Härter enthaltenen flüssigen oder gelösten Bestandteile ein Aminwasserstoff-Equivalentgewicht von 50 bis 140 g/eq, bevorzugt 55 bis 120 g/eq, besonders bevorzugt 60 bis 100 g/eq, insbesondere 65 bis 90 g/eq, auf. Ein solcher Härter ermöglicht emissionsarme Epoxidharz-Beschichtungen mit hoher Endhärte und besonders schönen Oberflächen, insbesondere nach Aushärtung in der Kälte.

Bevorzugt ist der Härter niedrigviskos. Insbesondere liegt die Viskosität des Härters bei 20 °C bezogen auf die Summe aller im Härter enthaltenen flüssigen oder gelösten Bestandteile im Bereich von 10 bis 5'000 mPa·s, bevorzugt 10 bis 1'000 mPa·s, besonders bevorzugt 10 bis 500 mPa·s, insbesondere 10 bis 250 mPa·s, gemessen mittels Kegel-Platten Viskosimeter.

Der Härter enthaltend die erfindungsgemässe Lösung wird insbesondere verwendet zum Aushärten von mindestens einem Epoxidharz. Dabei kann die Lösung zuerst mit den weiteren Inhaltsstoffen vermischt und gegebenenfalls auch so gelagert werden. Oder die Lösung kann erst bei der Verwendung des Härters zum Aushärten des Epoxidharzes als separate Komponente zugegeben werden.

Ein weiterer Gegenstand der Erfindung ist somit eine Epoxidharz-Zusammensetzung umfassend eine Harz-Komponente enthaltend mindestens ein Epoxidharz und entweder
- eine Härter-Komponente umfassend den Härter enthaltend die erfindungsgemässe Lösung und mindestens ein weiteres Amin mit mindestens drei Aminwasserstoffen, wie vorgängig beschrieben,
oder
- eine Härter-Komponente umfassend mindestens ein Amin mit mindestens drei Aminwasserstoffen und als separate, dritte Komponente die erfindungsgemässe Lösung.

Ein geeignetes Epoxidharz wird auf bekannte Art und Weise erhalten, insbesondere aus der Reaktion von Epichlorhydrin mit Polyolen, Polyphenolen oder Aminen.

Geeignete Epoxidharze sind insbesondere aromatische Epoxidharze, insbesondere die Glycidylether von:
- Bisphenol A, Bisphenol F oder Bisphenol A/F, wobei A für Aceton und F für Formaldehyd steht, welche als Edukte zur Herstellung dieser Bisphenole dienten. Im Fall von Bisphenol F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzcatechin;
- weiteren Bisphenolen oder Polyphenolen wie Bis(4-hydroxy-3-methylphenyl)-methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)-heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]-benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Novolaken, welche insbesondere Kondensationsprodukte von Phenol oder Kresolen mit Formaldehyd bzw. Paraformaldehyd oder Acetaldehyd oder Crotonaldehyd oder Isobutyraldehyd oder 2-Ethylhexanal oder Benzaldehyd oder Furfural sind;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.

Bevorzugt ist das Epoxidharz ein Flüssigharz oder eine Mischung enthaltend zwei oder mehr Epoxid-Flüssigharze.

Als "Epoxid-Flüssigharz" wird ein technisches Polyepoxid mit einer Glasübergangstemperatur unterhalb von 25 °C bezeichnet.

Gegebenenfalls enthält die Harz-Komponente zusätzlich Anteile von Epoxid-Festharz.

Das Epoxidharz ist insbesondere ein Flüssigharz auf der Basis eines Bisphenols oder Novolaks, insbesondere mit einem mittleren Epoxid-Equivalentgewicht im Bereich von 156 bis 210 g/eq.

Besonders geeignet ist ein Bisphenol-A Diglycidylether und/oder Bisphenol-F-Diglycidylether, wie sie kommerziell beispielsweise von Olin, Huntsman oder Momentive erhältlich sind. Diese Flüssigharze weisen eine für Epoxidharze niedrige Viskosität auf und ermöglichen eine schnelle Aushärtung und hohe Härten. Sie können Anteile von Bisphenol A-Festharz oder Novolak-Epoxidharzen enthalten.

Weiterhin besonders geeignet sind Phenol-Formaldehyd Novolak-Glycidylether, mit einer mittleren Funktionalität von 2.3 bis 4, bevorzugt 2.5 bis 3. Sie können Anteile von weiteren Epoxidharzen enthalten, insbesondere Bisphenol A Diglycidylether oder Bisphenol F-Diglycidylether.

Die Harz-Komponente kann einen Reaktivverdünner enthalten.

Als Reaktivverdünner bevorzugt sind Epoxidgruppen-haltige Reaktivverdünner, insbesondere Butandioldiglycidylether, Hexandioldiglycidylether, Trimethylolpropandi- oder triglycidylether, Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃-bis C₁₅-Alkylglycidylether.

In einer Ausführungsform umfasst die Härter-Komponente den vorgängig beschriebenen Härter enthaltend die erfindungsgemässe Lösung.

In einer weiteren Ausführungsform umfasst die Härter-Komponente mindestens ein Amin mit mindestens drei Aminwasserstoffen und die erfindungsgemässe Lösung liegt als separate, dritte Komponente vor.

Bevorzugt enthält die Epoxidharz-Zusammensetzung mindestens einen weiteren Bestandteil ausgewählt aus der Gruppe bestehend aus Verdünnern, Beschleunigern, Füllstoffen, Pigmenten und oberflächenaktiven Additiven.

Als Verdünner oder Beschleuniger geeignet sind insbesondere die bereits genannten.

Geeignete Füllstoffe sind insbesondere gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsiebe, Aluminiumoxid, Zinkoxid, Aluminium-dotiertes Zinkoxid, Aluminiumhydroxid, Magnesiumhydroxid, Kieselsäure, Zement, Gips, Flugasche, Russ, Graphit, Metall-Pulver wie Aluminium, Kupfer, Eisen, Zink, Silber oder Stahl, PVC-Pulver oder Hohlkugeln. Davon bevorzugt sind Calciumcarbonat, Baryt, Quarzmehl, Talk, Aluminiumpulver oder eine Kombination davon.

Geeignete Pigmente sind insbesondere Titandioxide, Eisenoxide, Chrom(III)oxide, organische Pigmente, Russ oder Korrosionsschutzpigmente, insbesondere Phosphate, Orthophosphate oder Polyphosphate, welche als Gegenion insbesondere Chrom, Zink, Aluminium, Kalzium, Strontium oder eine Kombination dieser Metalle enthalten. Besonders geeignet sind Titandioxide.

Geeignete oberflächenaktive Additive sind insbesondere Entschäumer, Entlüfter, Netzmittel, Dispergiermittel, Verlaufsmittel und/oder dispergierte Paraffinwachse. Gegebenenfalls enthält die Epoxidharz-Zusammensetzung weitere Hilfs- und Zusatzstoffe, insbesondere
- Reaktivverdünner, insbesondere die bereits vorgängig erwähnten, oder epoxidiertes Sojaöl oder Leinöl, Acetoacetatgruppen aufweisende Verbindungen, insbesondere acetoacetylierte Polyole, Butyrolakton, Carbonate, Aldehyde, Isocyanate oder Reaktivgruppen aufweisende Silikone,
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere oder Sulfonamid-modifizierte Melamine,
- Fasern, insbesondere Glasfasern, Kohlefasern, Metallfasern, Keramikfasern oder Kunststofffasern wie Polyamidfasern oder Polyethylenfasern,
- Nanofüllstoffe, insbesondere Carbon Nanotubes,
- Rheologie-Modifizierer, insbesondere Verdicker oder Antiabsetzmittel,
- Haftverbesserer, insbesondere Organoalkoxysilane,
- flammhemmende Substanzen, insbesondere die bereits genannten Füllstoffe Aluminiumhydroxid oder Magnesiumhydroxid, Antimontrioxid, Antimonpentoxid, Borsäure, Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinoldiphosphat-Oligomer, Tetraphenylresorcinoldiphosphit, Ethylendiamindiphosphat, Bisphenol A-bis(diphenylphosphat), Tris(chloroethyl)phosphat, Tris(chloropropyl)-phosphat, Tris(dichloroisopropyl)phosphat, Tris[3-bromo-2,2-bis(bromomethyl)-propyl]phosphat, Tetrabromo-Bisphenol A, Bis(2,3-dibromopropylether) von Bisphenol A, bromierte Epoxidharze, Ethylen-bis(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine, oder
- Stabilisatoren gegen Oxidation, Wärme, Licht oder UV-Strahlung oder Biozide.

Bevorzugt enthält die Epoxidharz-Zusammensetzung nur einen geringen Gehalt an Verdünnern. Bevorzugt enthält sie weniger als 20 Gewichts-%, besonders bevorzugt weniger als 10 Gewichts-%, insbesondere weniger als 5 Gewichts-%, , am meisten bevorzugt weniger als 1 Gewichts-% Verdünner. Solche Epoxidharz-Produkte sind besonders emissionsarm.

Die Epoxidharz-Zusammensetzung kann Wasser enthalten.

In einer Ausführungsform ist die Epoxidharz-Zusammensetzung wasserbasiert. Dabei ist das Epoxidharz bevorzugt in einer Menge von 50 bis 85 Gewichts-% in Wasser emulgiert und die Härter-Komponente enthält bevorzugt 20 bis 80 Gewichts-% Wasser.

Bevorzugt enthält die Epoxidharz-Zusammensetzung nur einen geringen Gehalt an Wasser, bevorzugt weniger als 5 Gewichts-%, insbesondere weniger als 1 Gewichts-%, Wasser. Eine solche, nicht-wasserbasierte Epoxidharz-Zusammensetzung ist besonders vielseitig verwendbar und besonders wasserbeständig.

Die Harz-Komponente, die Härter-Komponente und - falls vorhanden - die dritte Komponente bzw. die erfindungsgemässe Lösung werden in voneinander getrennten Gebinden gelagert. Ein geeignetes Gebinde ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Für den Fall, dass die erfindungsgemässe Lösung als Bestandteil der Härter-Komponente vorliegt, werden die Harz-Komponente und die Härter-Komponente kurz vor oder während der Applikation miteinander vermischt.

Für den Fall, dass die erfindungsgemässe Lösung als separate, dritte Komponente vorliegt, werden die drei Komponenten kurz vor oder während der Applikation miteinander vermischt. Dabei ist jede Reihenfolge möglich. Bevorzugt werden alle drei Komponenten zusammen vermischt, oder die Härter-Komponente und die dritte Komponente werden vorgängig vermischt und dann mit der Harz-Komponente vermischt. Auch möglich, aber weniger bevorzugt, ist ein Vorgehen, bei welchem die Harz- und die Härter-Komponente vorgängig vermischt werden und anschliessend die dritte Komponente eingemischt wird.

Das Mischungsverhältnis der Komponenten wird bevorzugt so gewählt, dass das molare Verhältnis der gegenüber Epoxidgruppen reaktiven Gruppen zu den Epoxidgruppen im Bereich von 0.5 bis 1.5, insbesondere 0.7 bis 1.2, liegt, und dass der Gehalt an Polyphenol im Härter im vorgängig beschriebenen bevorzugten Bereich liegt. In Gewichtsteilen liegt das Mischungsverhältnis zwischen der Harz- und der Härter-Komponente typischerweise im Bereich von 1:2 bis 20:1.

Das Mischen der Komponenten erfolgt kontinuierlich oder batchweise mittels eines geeigneten Verfahrens, wobei darauf zu achten ist, dass zwischen dem Mischen der Komponente und der Applikation nicht zu viel Zeit vergeht und die Applikation innerhalb der Topfzeit erfolgt. Das Mischen und die Applikation erfolgen bevorzugt bei Umgebungstemperatur, welche typischerweise im Bereich von etwa 5 bis 40 °C, bevorzugt bei etwa 10 bis 35 °C, liegt.

Mit dem Mischen der Komponenten beginnt die Aushärtung der Epoxidharz-Zusammensetzung durch chemische Reaktion. Primäre und sekundäre Aminogruppen und gegebenenfalls vorhandene weitere gegenüber Epoxidgruppen reaktive Gruppen reagieren mit den Epoxidgruppen unter deren Ringöffnung. Als Ergebnis hauptsächlich dieser Reaktionen polymerisiert die Zusammensetzung und härtet dadurch aus.

Die Aushärtung erstreckt sich typischerweise über einige Stunden bis Tage. Die Dauer hängt unter anderem von der Temperatur, der Reaktivität der Bestandteile, deren Stöchiometrie, dem Gehalt an Polyphenol und der Gegenwart bzw. Menge von weiteren Beschleunigern ab.

Im frisch vermischten Zustand hat die Epoxidharz-Zusammensetzung eine niedrige Viskosität. Bevorzugt liegt die Viskosität 5 Minuten nach dem Mischen der Komponenten bei 20 °C im Bereich von 0.1 bis 20 Pa·s, bevorzugt 0.2 bis 10 Pa·s, besonders bevorzugt 0.3 bis 5 Pa·s, gemessen mittels Kegel-Platten Viskosimeter wie vorgängig beschrieben.

Die Applikation der Epoxidharz-Zusammensetzung erfolgt auf mindestens ein Substrat und/oder in mindestens eine Giessform.

Als Substrat geeignet sind insbesondere:
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Isolierschäume, insbesondere aus EPS, XPS, PUR, PIR, Steinwolle, Glaswolle, Aerogel oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke, insbesondere beschichtete Böden, welche mit einer weiteren Bodenbelagsschicht überschichtet werden.

Die Substrate können bei Bedarf vor dem Applizieren vorbehandelt werden, insbesondere durch physikalische und/oder chemische Reinigungsverfahren oder das Aufbringen eines Aktivators oder eines Primers.

Die Substrate werden insbesondere beschichtet und/oder verklebt.

Als Giessform geeignet ist eine Vorrichtung, in welche die vermischte, flüssige Epoxidharz-Zusammensetzung gegossen und darin ausgehärtet werden und nach der Aushärtung daraus entformt bzw. entnommen werden kann, wobei die ausgehärtete Zusammensetzung einen Formkörper bildet.

Die Giessform besteht bevorzugt zumindest auf der Oberfläche aus einem Material, von welchem die ausgehärtete Epoxidharz-Zusammensetzung ohne Beschädigung wieder gelöst werden kann, insbesondere aus Metall, Keramik, Kunststoff oder Silikon, welche gegebenenfalls mit einer Antihaft-Beschichtung versehen sind, insbesondere aus Teflon, Silikon oder einem Wachs.

Ein weiterer Gegenstand der Erfindung ist die ausgehärtete Zusammensetzung erhalten aus der beschriebenen Epoxidharz-Zusammensetzung nach dem Vermischen der Komponenten.

Die Epoxidharz-Zusammensetzung wird bevorzugt verwendet als Beschichtung, Primer, Klebstoff, Dichtstoff, Vergussmasse, Giessharz, Imprägnierharz, Injektionsharz, Ankerklebstoff, Klebemörtel oder als Formkörper oder Matrix für Verbundwerkstoffe.

Besonders bevorzugt wird die Epoxidharz-Zusammensetzung verwendet als Beschichtung, insbesondere als Bodenbeschichtung, Wandbeschichtung, Bauteilbeschichtung, Rohrbeschichtung, Tankinnenbeschichtung, Dachbeschichtung oder Schutzbeschichtung, insbesondere Korrosionsschutzbeschichtung.

Die erfindungsgemässe Lösung ermöglicht Epoxidharz-Produkte mit besonders vorteilhafte Eigenschaften. Das Zudosieren des Polyphenols ist ohne Verwendung von Verdünnern oder Lösemitteln besonders einfach möglich, und es werden insbesondere emissionsarme Epoxidharz-Beschichtungen erhalten mit schneller Aushärtung, besonders geringer Neigung zu durch Blushing verursachten Störungen der Oberfläche, hoher Endhärte und einer überraschend störungsfreien Aushärtung in der Kälte. Dabei werden diese vorteilhaften Eigenschaften bereits bei geringer Dosierung der erfindungsgemässen Lösung erreicht, wodurch die Verarbeitbarkeit solcher Beschichtungen auch ohne Verdünner sehr gut ist.

Die besonders störungsfreie Aushärtung in der Kälte zeigt sich insbesondere im Vergleich der Königshärte
a) nach Aushärtung bei 8°C/80% relativer Feuchtigkeit während 7 Tagen gefolgt von 14 Tagen Nachhärtung bei 23°C/50% relativer Feuchtigkeit,
mit der Königshärte
b) nach Aushärtung während 14 Tagen bei 23°C/50% relativer Feuchtigkeit, wobei die erfindungsgemässe Epoxidharz-Beschichtung eine Königshärte a) erreicht, welche nahezu oder ganz der Königshärte b) entspricht. Insbesondere erreicht die erfindungsgemässe Epoxidharz-Beschichtung einen Wert für die Königshärte a), der mindestens 70 %, bevorzugt mindestens 80 %, besonders bevorzugt mindestens 90 %, des Wertes der Königshärte b) entspricht.

Diese besonders störungsfreie Aushärtung wird mit der erfindungsgemässen Epoxidharz-Beschichtung insbesondere auch ohne oder mit nur wenig Verdünner wie Benzylalkohol erreicht. Eine solche Epoxidharz-Beschichtung ist somit besonders emissionsarm und besonders robust in Bezug auf die Umgebungsbedingungen bei der Verarbeitung und in Bezug auf die Dauerhaftigkeit im Gebrauch.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
"AHEW" steht für das Aminwasserstoff-Equivalentgewicht.
"EEW" steht für das Epoxid-Equivalentgewicht.
Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

### Verwendete Substanzen und Abkürzungen:

- Araldite^{®} GY 250:: Bisphenol A-Diglycidylether, EEW ca. 187 g/eq (von Huntsman)
- Araldite^{®} DY-E:: Monoglycidylether von C₁₂- bis C₁₄-Alkoholen, EEW ca. 290 g/eq (von Huntsman)
- Araldite^{®} DY-H:: Hexandioldiglycidylether, EEW ca. 147 g/eq (von Huntsman)
- B-EDA:: N-Benzyl-1,2-ethandiamin, 150.2 g/mol, AHEW 50.1 g/eq, hergestellt wie nachfolgend beschrieben
- B-EDA-mix:: Reaktionsmischung enthaltend N-Benzyl-1,2-ethandiamin und N,N'-Dibenzyl-1,2-ethandiamin in einem Gewichtsverhältnis von 85/15, hergestellt wie nachfolgend beschrieben, AHEW 55 g/Eq
- F-EDA:: N-Furfuryl-1,2-ethandiamin, 140.1 g/mol, AHEW 46.7 g/eq, hergestellt wie nachfolgend beschrieben
- B-PDA:: N-Benzyl-1,2-propandiamin, 164.4 g/mol, AHEW 54.8 g/eq, hergestellt wie nachfolgend beschrieben
- DMAPAPA:: 3-(3-Dimethylaminopropylamino)propylamin, AHEW 53 g/eq (DMAPAPA, von Arkema).
- IPDA: 3-Aminomethyl-3,5,5-trimethylcyclohexylamin, AHEW 42.6 g/eq (Vestamin^{®} IPD, von Evonik)
- MXDA:: 1,3-Bis(aminomethyl)benzol, AHEW 34 g/Eq (von Mitsubishi Gas Chemical)
- BAC: 1,3-Bis(aminomethyl)cyclohexan, AHEW 35.5 g/Eq (von Mitsubishi Gas Chemical)
- Phenolharz **PH-1**: Phenol-Formaldehyd-Novolak, mittleres Molekulargewicht Mₙ ca. 430 g/mol, Erweichungspunkt 65 bis 75 °C, (Alnovol^{®} PN 327/100, von Allnex)
- Phenolharz **PH-2**: Phenol-Formaldehyd-Novolak, mittleres Molekulargewicht Mₙ ca. 440 g/mol, Erweichungspunkt 65 bis 75 °C, (Supraplast^{®} 3616, von Süd-West-Chemie)
- Phenolharz **PH-3**: Phenol-Formaldehyd-Novolak, mittleres Molekulargewicht Mₙ ca. 950 g/mol, Erweichungspunkt 78 bis 82 °C, (Phenolite^{®} TD-2131, von DIC)
- Phenolharz **PH-4**: Phenol-Formaldehyd-Novolak, mittleres Molekulargewicht Mₙ ca. 2'400 g/mol, Erweichungspunkt 108 bis 120 °C, (Alnovol^{®} PN 320, von Allnex)
- Phenolharz **PH-5**: Phenol-Formaldehyd-Novolak, mittleres Molekulargewicht Mₙ ca. 2'600 g/mol, Erweichungspunkt 95 bis 110 °C, (FERS^{®} FB8000SH, von Sumimoto Bakelite)
- DPA: Diphenolsäure (4,4-Bis(4-hydroxyphenyl)valeriansäure)
- K54: 2,4,6-Tris(dimethylaminomethyl)phenol (Ancamine^{®} K54, von Evonik)

### Reaktionsmischung enthaltend N-Benzyl-1,2-ethandiamin (B-EDA-mix):

180.3 g (3 mol) 1,2-Ethandiamin wurden bei Raumtemperatur vorgelegt, mit einer Lösung aus 106.0 g (1 mol) Benzaldehyd in 1'200 ml Isopropanol vermischt, bei 80°C, 80 bar Wasserstoff-Druck und einem H₂-Fluss von 5 ml/min auf einer kontinuierlich arbeitenden Hydrierapparatur mit Pd/C-Festbettkatalysator hydriert und die hydrierte Lösung am Rotationsverdampfer bei 65°C von den flüchtigen Bestandteilen befreit. Erhalten wurde eine gelbliche klare Flüssigkeit mit einem mittels GC bestimmten Gehalt an N-Benzyl-1,2-ethandiamin von ca. 81 Gewichts-% und N,N'-Dibenzyl-1,2-ethandiamin von ca. 14 Gewichts-%, einem Gehalt an 1,2-Ethandiamin von 0.3 Gewichts-% und einem berechneten AHEW von 55 g/eq, welche im Folgenden als **B-EDA-mix** eingesetzt wurde.

### N-Benzyl-1,2-ethandiamin (B-EDA):

Ein Teil der Reaktionsmischung enthaltend N-Benzyl-1,2-ethandiamin (B-EDA-mix), hergestellt wie vorgängig beschrieben, wurde bei 80°C unter Vakuum mittels Destillation gereinigt. Erhalten wurde eine farblose Flüssigkeit mit einem AHEW von 50.1 g/eq und einem mittels GC bestimmten Gehalt an N-Benzyl-1,2-ethandiamin von > 97%, welche im Folgenden als **B-EDA** eingesetzt wurde.

### N-Furfuryl-1,2-ethandiamin (F-EDA):

105.2 g (1.75 mol) 1,2-Ethandiamin wurden bei Raumtemperatur vorgelegt, mit einer Lösung aus 48.1 g (0.5 mol) Furfural in 1'200 ml Isopropanol vermischt, bei 80°C, 80 bar Wasserstoff-Druck und einem H₂-Fluss von 5 ml/min auf einer kontinuierlich arbeitenden Hydrierapparatur mit Pd/C-Festbettkatalysator hydriert und die hydrierte Lösung am Rotationsverdampfer bei 65°C von den flüchtigen Bestandteilen befreit. Die so erhaltene Reaktionsmischung wurde bei 70°C unter Vakuum mittels Destillation gereinigt. Erhalten wurde eine farblose Flüssigkeit mit einem AHEW von 46.7 g/eq und einem mittels GC bestimmten Gehalt an N-Furfuryl-1,2-ethandiamin von 94.6 Gewichts-% und N-Tetrahydrofurfuryl-1,2-ethandiamin von 5.3 Gewichts-%, welche im Folgenden als **F-EDA** eingesetzt wurde.

### N-Benzyl-1,2-propandiamin (B-PDA):

222.4 g (3 mol) 1,2-Propandiamin wurden bei Raumtemperatur vorgelegt, mit einer Lösung aus 106.0 g (1 mol) Benzaldehyd in 1'200 ml Isopropanol vermischt, bei 80°C, 80 bar Wasserstoff-Druck und einem H₂-Fluss von 5 ml/min auf einer kontinuierlich arbeitenden Hydrierapparatur mit Pd/C-Festbettkatalysator hydriert und die hydrierte Lösung am Rotationsverdampfer bei 65°C von den flüchtigen Bestandteilen befreit. Die so erhaltene Reaktionsmischung wurde bei 80°C unter Vakuum mittels Destillation gereinigt. Erhalten wurde eine farblose Flüssigkeit mit einem AHEW von 54.8 g/eq und einem mittels GC bestimmten Gehalt an N-Benzyl-1,2-propandiamin von > 97% und gemäss ¹H-NMR einem Verhältnis von N¹-Benzyl-1,2-propandiamin und N²-Benzyl-1,2-propandiamin von ca. 2/1, welche im Folgenden als **B-PDA** eingesetzt wurde.

### Herstellung von Lösungen:

### Lösungen L-1 bis L-28:

Gemäss den Tabellen 1 und 2 wurde für jede Lösung das angegebene Amin vorgelegt, auf 50 bis 80 °C aufgewärmt, das angegebene Polyphenol in der angegebenen Menge unter Rühren im Amin aufgelöst und die Lösung auf Raumtemperatur abgekühlt.

Nach einer Lagerzeit der Lösung von 24 Stunden bei Raumtemperatur wurde die **Viskosität** der Lösung auf einem thermostatisierten Kegel-Platten-Viskosimeter Rheotec RC30 (Kegeldurchmesser 50 mm, Kegelwinkel 1°, Kegelspitze-PlattenAbstand 0.05 mm) bei der angegebenen Temperatur gemessen, wobei für Viskositäten von weniger als 100 mPas eine Scherrate von 100 s⁻¹ und für Viskositäten von 100 mPas oder mehr eine Scherrate von 10 s⁻¹ verwendet wurde.

Die mit **"(Ref.)"** bezeichneten Lösungen sind nicht erfindungsgemässe Vergleichsbeispiele.

**Tabelle 1: Zusammensetzung und Viskosität der Lösungen L-1 bis L-22.**

| | Amin | Phenolharz | Gewichtsverhältnis¹ | Viskosität [mPa·s] | |
|---|---|---|---|---|---|
| Lösung **L-1** | B-EDA | PH-1 | 80 / 20 | 89 | (20°C) |
| Lösung **L-2** | B-EDA | PH-1 | 70/30 | 525 | (20°C) |
| Lösung **L-3** | B-EDA | PH-1 | 60 / 40 | 7'920 | (20°C) |
| Lösung **L-4** | F-EDA | PH-1 | 80 / 20 | 68 | (20°C) |
| Lösung **L-5** | F-EDA | PH-1 | 70/30 | 315 | (20°C) |
| Lösung **L-6** | F-EDA | PH-1 | 60 / 40 | 3'710 | (20°C) |
| Lösung **L-7** | B-PDA | PH-1 | 80 / 20 | 94 | (20°C) |
| Lösung **L-8 (Ref.)** | IPDA | PH-1 | 80/20 | 2'022 | (20°C) |
| Lösung **L-9 (Ref.)** | IPDA | PH-1 | 70 / 30 | 38'700 | (25°C) |
| Lösung **L-10 (Ref.)** | MXDA | PH-1 | 80/20 | 85 | (20°C) |
| Lösung **L-11 (Ref.)** | MXDA | PH-1 | 70 / 30 | 695 | (20°C) |
| Lösung **L-12 (Ref.)** | MXDA | PH-1 | 60 / 40 | 14'900 | (20°C) |
| Lösung **L-13 (Ref.)** | BAC | PH-1 | 80 / 20 | 153 | (20°C) |
| Lösung **L-14 (Ref.)** | BAC | PH-1 | 70 / 30 | 1'830 | (20°C) |
| Lösung **L-15 (Ref.)** | BAC | PH-1 | 60 / 40 | 28'900 | (25°C) |
| Lösung **L-16 (Ref.)** | TMD | PH-1 | 80/20 | 83 | (20°C) |
| Lösung **L-17 (Ref.)** | TMD | PH-1 | 70 / 30 | 565 | (20°C) |
| Lösung **L-18 (Ref.)** | TMD | PH-1 | 60 / 40 | 9'590 | (20°C) |
| Lösung **L-19** | B-EDA | PH-2 | 80 / 20 | 78 | (20°C) |
| Lösung **L-20** | B-EDA | PH-3 | 80 / 20 | 114 | (20°C) |
| Lösung **L-21** | B-EDA | PH-4 | 80 / 20 | 186 | (20°C) |
| Lösung **L-22** | B-EDA | PH-5 | 80 / 20 | 156 | (20°C) |

| | | | | | |
|---|---|---|---|---|---|
| ¹ Gewichtsverhältnis Amin / Phenolharz | | | | | |

**Tabelle 2: Zusammensetzung und Viskosität der Lösungen L-23 bis L-28.**

| | Amin | Polyphenol | Gewichtsverhältnis¹ | Viskosität [mPa·s] | |
|---|---|---|---|---|---|
| Lösung **L-23** | B-EDA | DPA | 80 / 20 | 330 | (20°C) |
| Lösung **L-24** | B-EDA | DPA | 70/30 | 8'860 | (20°C) |
| Lösung **L-25** | B-EDA-mix | DPA | 80 / 20 | 590 | (20°C) |
| Lösung **L-26 (Ref.)** | IPDA | DPA | 80 / 20 | zu dick | (Paste) |
| Lösung **L-27 (Ref.)** | MXDA | DPA | 80 / 20 | 350 | (20°C) |
| Lösung **L-28 (Ref.)** | BAC | DPA | 80 / 20 | 960 | (20°C) |

| | | | | | |
|---|---|---|---|---|---|
| ¹ Gewichtsverhältnis Amin / Polyphenol | | | | | |

### Herstellung von Härtern für Epoxidharze:

### Härter H-1 bis H-19:

Für jeden Härter wurde die in Tabelle 3 angegebenen Inhaltsstoffe in der angegebenen Menge (in Gewichtsteilen) mittels eines Zentrifugalmischers (SpeedMixer^{™} DAC 150, FlackTek Inc.) vermischt und unter Ausschluss von Feuchtigkeit aufbewahrt.

Die **Viskosität** der Härter wurde gemessen wie vorgängig beschrieben.

Das Aminequivalentgewicht **(AHEW)** der Härter wurde berechnet.

Die Resultate sind angegeben in Tabelle 3.

Mit **"(Ref.)"** bezeichnete Härter sind nicht erfindungsgemässe Vergleichsbeispiele.

**Tabelle 3: Zusammensetzung (in Gew.-%) und Eigenschaften der Härter H-1 bis H-19.**

| | Lösung | weitere Inhaltsstoffe | Viskosität [mPa·s] | AHEW [g/eq] |
|---|---|---|---|---|
| Härter **H-1 (Ref.)** | - | 100 % **B-EDA** | 7 | 50.1 |
| Härter **H-2** | 55.5 % **L-1** | 44.5 % **B-EDA** | 26 | 56.4 |
| Härter **H-3** | 100 % **L-1** | - | 89 | 62.6 |
| Härter **H-4** | 55.5 % **L-19** | 44.5 % **B-EDA** | 20 | 56.4 |
| Härter **H-5** | 55.5 % **L-21** | 44.5 % **B-EDA** | 25 | 56.4 |
| Härter **H-6** | 55.5 % **L-22** | 44.5 % **B-EDA** | 32 | 56.4 |
| Härter **H-7 (Ref.)** | - | 92.6 % **B-EDA** 7.4 % **K54** | n.b. | 54.1 |
| Härter **H-8 (Ref.)** | - | 100 % **F-EDA** | 3 | 46.7 |
| Härter **H-9** | 59.1 % **L-4** | 40.9 % **F-EDA** | 21 | 53.0 |
| Härter **H-10** | 51.2 % **L-7** | 48.8 % **B-PDA** | 22 | 61.1 |
| Härter **H-11** | 55.0 % **L-1** | 30.9 % **B-EDA** 14.1 % **DMAPAPA** | 20 | 56.9 |
| Härter **H-12 (Ref.)** | 64.0 % **L-8** | 36.0 % **IPDA** | 233 | 48.9 |
| Härter **H-13 (Ref.)** | 77.7 % **L-10** | 22.3 % **MXDA** | 47 | 40.3 |
| Härter **H-14 (Ref.)** | 74.9 % **L-13** | 25.1 % **BAC** | 79 | 41.8 |
| Härter **H-15 (Ref.)** | 68.2 % **L-16** | **31.8 % TMD** | 30 | 45.9 |
| Härter **H-16** | 55.5 % **L-23** | 44.5 % **B-EDA** | 48 | 56.4 |
| Härter **H-17** | 51.1 % **L-25** | 48.9 % **B-EDA-mix** | 49 | 61.3 |
| Härter **H-18 (Ref.)** | 77.7 % **L-27** | 22.3 % **MXDA** | 111 | 40.3 |
| Härter **H-19 (Ref.)** | 74.9 % **L-28** | 25.1 % **BAC** | 230 | 41.8 |

| | | | | |
|---|---|---|---|---|
| "n.b." steht für "nicht bestimmt" | | | | |

### Herstellung von Epoxidharz-Zusammensetzungen:

### Zusammensetzungen Z-1 bis Z-19:

Für jede Zusammensetzung wurden die in den Tabellen 4 bis 7 angegebenen Inhaltsstoffe der Harz-Komponente in den angegebenen Mengen (in Gewichtsteilen) mittels eines Zentrifugalmischers (SpeedMixer^{™} DAC 150, FlackTek Inc.) vermischt und unter Ausschluss von Feuchtigkeit aufbewahrt. Anschliessend wurden die in den Tabellen 4 bis 7 angegebenen Härter in den angegebenen Mengen (in Gewichtsteilen) mittels des Zentrifugalmischers mit der

Harz-Komponente vermischt und die vermischte Zusammensetzung unverzüglich folgendermassen geprüft:
Die **Viskosität (5')** wurde 5 min nach dem Vermischen der Harz- und der Härter-Komponente wie vorgängig beschrieben bei einer Temperatur von 20 °C gemessen.

Die **Gelierzeit** wurde bestimmt, indem eine frisch vermischte Menge von ca. 3 g im Normklima mit einem Spatel in regelmässigen Abständen bewegt wurde, bis die Masse gelierte.

Die **Shore D** Härte wurde bestimmt nach DIN 53505 an zwei zylindrischen Prüfkörpern (Durchmesser 20 mm, Dicke 5 mm), wobei einer im Normklima und einer bei 8 °C und 80% relativer Feuchtigkeit gelagert und die Härte jeweils nach 1 Tag (24h) und nach 2 Tagen gemessen wurde.

Weiterhin wurde ein Film in einer Schichtdicke von 500 µm auf eine Glasplatte aufgezogen und dieser im Normklima gelagert bzw. ausgehärtet. An diesem Film wurde die **Königshärte** (Pendelhärte nach König nach DIN EN ISO 1522) nach 1 Tag, 2 Tagen, 7 Tagen und nach 14 Tagen bestimmt **(1d NK), (2d NK), (7d NK), (14d NK).** Nach 14 Tagen wurde der **Aspekt (NK)** des Films beurteilt. Als "schön" wurde ein klarer Film bezeichnet, welcher eine glänzende und nichtklebrige Oberfläche ohne Struktur aufwies. Als "Struktur" wurde jegliche Art von Zeichnung oder Muster auf der Oberfläche bezeichnet.

Ein weiterer Film wurde in einer Schichtdicke von 500 µm auf eine Glasplatte aufgezogen und dieser unmittelbar nach dem Applizieren während 7 Tagen bei 8 °C und 80% relativer Feuchtigkeit und anschliessend während 2 Wochen im Normklima gelagert, beziehungsweise ausgehärtet. 24 Stunden nach der Applikation wurde ein Flaschendeckel aus Polypropylen auf den Film aufgesetzt, unter welchem ein feuchter Schwamm platziert war. Nach weiteren 24 Stunden wurden der Schwamm und der Deckel entfernt und an einer neuen Stelle des Films platziert, wo sie nach 24 Stunden wieder entfernt und neu platziert wurden, insgesamt 4 mal. Anschliessend wurde der Aspekt dieses Films beurteilt (in den Tabellen mit **"Aspekt (8°/80%)"** bezeichnet), auf die gleiche Weise wie für den Aspekt (NK) beschrieben. Dabei wurde jeweils auch die Anzahl und Art der sichtbaren Marken angegeben, die im Film durch den feuchten Schwamm oder den aufgesetzten Deckel entstanden waren. Als "Blushing" wurde die Anzahl weiss verfärbte Flecken angegeben. Als "(1)" wurde ein schwacher, weiss verfärbter Fleck bezeichnet. Als "1" wurde ein deutlicher, weiss verfärbter Fleck bezeichnet. Als "Ring" wurde angegeben, wie viele ringförmige Abdrucke durch das Einsinken der aufgesetzten Deckel vorhanden waren. Als "(1)" wurde ein schwacher Abdruck des Deckels bezeichnet, als "1" ein deutlicher Abdruck. (Ein ringförmiger Abdruck zeigt an, dass die Beschichtung noch nicht begehbar ist.) An den so ausgehärteten Filmen wurde wiederum die Königshärte bestimmt, jeweils nach 7 Tagen bei 8 °C und 80% relativer Feuchtigkeit **(Königsh. (7d 8°/80%)**), dann nach weiteren 2 Tagen im NK **(Königsh. (+2d NK))** bzw. 7 Tagen im NK **(Königsh. (+7d NK))** bzw. 14d im NK **(Königsh. (+14d NK)).**

Als Mass für die Vergilbung wurde weiterhin die Farbveränderung nach Belastung in einem Bewitterungstester bestimmt. Dazu wurde ein weiterer Film in einer Schichtdicke von 500 µm auf eine Glasplatte aufgezogen und dieser im Normklima während 2 Wochen gelagert bzw. ausgehärtet und anschliessend in einem Bewitterungstester des Typs Q-Sun Xenon Xe-1 mit optischem Filter Q-SUN Daylight-Q und einer Xenon Lampe mit einer Lichtstärke von 0.51 W/m² bei 340 nm bei einer Temperatur von 65°C während 72 Stunden belastet **(Q-Sun (72h)**). Anschliessend wurde der Farbunterschied ΔE des so belasteten Films im Vergleich zum entsprechenden nicht belasteten Film mittels einem Colorimeter NH310 von Shenzen 3NH Technology Co. LTD, ausgerüstet mit Silicon Photoelectric Diode Detector, Light Source A, Color Space Measurement Interface CIE L*a*b*C*H*, bestimmt. ΔE-Werte bis 5 stehen für eine leichte Vergilbung.

Die Resultate sind in den Tabellen 4 bis 7 angegeben.

Die mit **"(Ref.)"** bezeichneten Zusamensetzungen sind nicht erfindungsgemässe Vergleichsbeispiele.

**Tabelle 4: Zusammensetzung und Eigenschaften von Z-1 bis Z-7.**

| **Zusammensetzung** | | **Z-1 (Ref.)** | **Z-2** | **Z-3** | **Z-4** | **Z-5** | **Z-6** | **Z-7 (Ref.)** |
|---|---|---|---|---|---|---|---|---|
| **Harz-Komponente:** | | | | | | | | |
| Araldite^{®} GY-250 | | 167.2 | 167.2 | 167.2 | 167.2 | 167.2 | 167.2 | 167.2 |
| Araldite^{®} DY-E | | 31.8 | 31.8 | 31.8 | 31.8 | 31.8 | 31.8 | 31.8 |
| **Härter:** | | **H-1** | **H-2** | **H-3** | **H-4** | **H-5** | **H-6** | **H-7** |
| | | 50.1 | 56.4 | 62.6 | 56.4 | 56.4 | 56.4 | 54.1 |
| Viskosität (5') [mPa·s] | | 190 | 390 | 740 | 460 | 590 | 510 | 230 |
| Gelierzeit (h:min) | | 5:20 | 3:15 | 2:30 | 2:55 | 3:00 | 2:50 | 4:30 |
| Shore D | (1d NK) | 61 | 79 | 75 | 68 | 73 | 71 | 74 |
| | (2d NK) | 62 | 81 | 77 | 78 | 75 | 77 | 75 |
| Shore D | (1d 8°/80%) | n.m.1 | 70 | 73 | 66 | 62 | 65 | 19 |
| | (2d 8°/80%) | 72 | 73 | 75 | 73 | 70 | 74 | 76 |
| Königshärte [s] | (1d NK) | 56 | 129 | 139 | 102 | 120 | 109 | 106 |
| | (2d NK) | 72 | 162 | 161 | 137 | 158 | 129 | 149 |
| | (7d NK) | 136 | 181 | 182 | 182 | 181 | 179 | 184 |
| | (14d NK) | 151 | 200 | 198 | 200 | 201 | 200 | 201 |
| Aspekt (NK) | | schön | schön | schön | schön | schön | schön | schön |
| Q-Sun (72h) ΔE | | 4.2 | 8.6 | 10.7 | 8.5 | 11.7 | 7.0 | 12.3 |
| Königsh. [s] | (7d 8°/80%) | 21 | 56 | 71 | 35 | 49 | 42 | 49 |
| | (+2d NK) | 55 | 130 | 161 | 69 | 134 | 120 | 106 |
| | (+7d NK) | 85 | 176 | 176 | 154 | 171 | 150 | 136 |
| | (+14d NK) | 112 | 182 | 184 | 168 | 175 | 169 | 148 |
| Aspekt (8°/80%) | | schön | schön | schön | schön | schön | schön | schön |
| Blushing | | kein | kein | kein | kein | kein | kein | 1 |
| Ring | | kein | kein | kein | kein | kein | kein | kein |
| KH (kalt) / KH (NK) ² | | 74 % | 91 % | 93 % | 84 % | 87 % | 85 % | 74 % |

| | | | | | | | | |
|---|---|---|---|---|---|---|---|---|
| ¹ nicht messbar (zu weich) ² Königshärte (7d 8°/80% +14d NK) im Verhältnis zur Königshärte (14d NK) in Prozent | | | | | | | | |

**Tabelle 5: Zusammensetzung und Eigenschaften von Z-8 bis Z-11.**

| **Zusammensetzung** | | **Z-8 (Ref.)** | **Z-9** | **Z-10** | **Z-11** |
|---|---|---|---|---|---|
| **Harz-Komponente:** | | | | | |
| Araldite^{®} GY-250 | | 167.2 | 167.2 | 167.2 | 167.2 |
| Araldite^{®} DY-E | | 31.8 | 31.8 | 31.8 | 31.8 |
| **Härter:** | | **H-8** | **H-9** | **H-10** | **H-11** |
| | | 46.7 | 53.0 | 61.1 | 56.9 |
| Königshärte [s] | (1d NK) | 38 | 105 | 115 | 101 |
| | (2d NK) | 57 | 129 | 171 | 113 |
| | (7d NK) | 118 | 162 | 203 | 186 |
| | (14d NK) | 119 | 182 | 205 | 201 |
| Aspekt (NK) | | schön | schön | schön | schön |
| Q-Sun (72h) ΔE | | 12.9 | 29.0 | 3.9 | 17.2 |
| Königsh. [s] | (7d 8°/80%) | 11 | 27 | 66 | 60 |
| | (+2d NK) | 36 | 64 | 175 | 115 |
| | (+7d NK) | 52 | 137 | 201 | 157 |
| | (+14d NK) | 81 | 154 | 201 | 174 |
| Aspekt (8°/80%) | | schön | schön | schön | schön |
| Blushing | | 1 | (1) | kein | (1) |
| Ring | | 1 | kein | (1) | kein |
| KH (kalt) / KH (NK) ¹ | | 68 % | 85 % | 98 % | 87 % |

| | | | | | |
|---|---|---|---|---|---|
| ¹ Königshärte (7d 8°/80% +14d NK) im Verhältnis zur Königshärte (14d NK) in Prozent | | | | | |

**Tabelle 6: Zusammensetzung und Eigenschaften von Z-12 bis Z-15.**

| **Zusammensetzung** | | **Z-12 (Ref.)** | **Z-13 (Ref.)** | **Z-14 (Ref.)** | **Z-15 (Ref.)** |
|---|---|---|---|---|---|
| **Harz-Komponente:** | | | | | |
| Araldite^{®} GY-250 | | 167.2 | 167.2 | 167.2 | 167.2 |
| Araldite^{®} DY-E | | 31.8 | 31.8 | 31.8 | 31.8 |
| **Härter:** | | **H-12** | **H-13** | **H-14** | **H-15** |
| | | 48.9 | 40.3 | 41.8 | 45.9 |
| Viskosität (5') [mPa·s] | | 1'240 | 760 | 890 | 620 |
| Gelierzeit (h:min) | | 2:45 | 2:15 | 1:35 | 2:20 |
| Shore D | (1d NK) | 65 | 75 | 76 | 76 |
| | (2d NK) | 72 | 79 | 81 | 83 |
| Shore D | (1d 8°/80%) | 45 | 78 | 73 | 34 |
| | (2d 8°/80%) | 54 | 81 | 77 | 72 |
| Königshärte [s] | (1d NK) | 132 | 73 | 113 | 63 |
| | (2d NK) | 158 | 94 | 87 | 99 |
| | (7d NK) | 195 | 101 | 95 | 129 |
| | (14d NK) | 201 | 125 | 105 | 197 |
| Aspekt (NK) | | Struktur | Struktur | Struktur | Struktur |
| Q-Sun (72h) ΔE | | 7.9 | 11.4 | 14.0 | 16.1 |
| Königsh. [s] | (7d 8°/80%) | 67 | 18 | 35 | 11 |
| | (+2d NK) | 70 | 34 | 36 | 14 |
| | (+7d NK) | 137 | 43 | 38 | 29 |
| | (+14d NK) | 141 | 63 | 42 | 43 |
| Aspekt (8°/80%) | | trüb | trüb | Struktur | trüb |
| Blushing | | 4 | 3 | 2 | 3 |
| Ring | | kein | kein | kein | kein |
| KH (kalt) / KH (NK) ¹ | | 70 % | 50 % | 40 % | 22 % |

| | | | | | |
|---|---|---|---|---|---|
| ¹ Königshärte (7d 8°/80% +14d NK) im Verhältnis zur Königshärte (14d NK) in Prozent | | | | | |

**Tabelle 7: Zusammensetzung und Eigenschaften von Z-16 bis Z-19.**

| **Zusammensetzung** | | **Z-16** | **Z-17** | **Z-18 (Ref.)** | **Z-19 (Ref.)** |
|---|---|---|---|---|---|
| **Harz-Komponente:** | | | | | |
| Araldite^{®} GY-250 | | 167.2 | 167.2 | 167.2 | 167.2 |
| Araldite^{®} DY-E | | 31.8 | 31.8 | 31.8 | 31.8 |
| **Härter:** | | **H-16** | **H-17** | **H-18** | **H-19** |
| | | 56.4 | 61.3 | 40.3 | 41.8 |
| Viskosität (5') [mPa·s] | | 520 | 510 | n.m.¹ | n.m.¹ |
| Gelierzeit (h:min) | | 3:20 | 3:25 | n.m.1 | n.m.1 |
| Shore D | (1d NK) | 79 | 78 | n.m.1 | n.m.1 |
| | (2d NK) | 80 | 80 | | |
| Shore D | (1d 8°/80%) | 61 | 62 | n.m.1 | n.m.1 |
| | (2d 8°/80%) | 63 | 74 | | |
| Königshärte [s] | (1d NK) | 129 | 99 | | |
| | (2d NK) | 167 | 168 | n.m.1 | n.m.1 |
| | (7d NK) | 200 | 185 | | |
| | (14d NK) | 202 | 195 | | |
| Aspekt (NK) | | schön | schön | n.m.1 | n.m.1 |
| Königsh. [s] | (7d 8°/80%) | 57 | 56 | | |
| | (+2d NK) | 126 | 143 | n.m.1 | n.m.1 |
| | (+7d NK) | 181 | 185 | | |
| | (+14d NK) | 185 | 192 | | |
| Aspekt (8°/80%) | | schön | schön | | |
| Blushing | | (1) | (1) | n.m.¹ | n.m.¹ |
| Ring | | kein | kein | | |
| KH (kalt) / KH (NK) ² | | 91 % | 98 % | n.m.¹ | n.m.¹ |

| | | | | | |
|---|---|---|---|---|---|
| ¹ nicht messbar: inhomogen beim Vermischen aufgrund Unverträglichkeit des Härters mit der Harz-Komponente ² Königshärte (7d 8°/80% +14d NK) im Verhältnis zur Königshärte (14d NK) in Prozent | | | | | |

Verwendung einer Polyphenol-Lösung als separate Komponente:

### Zusammensetzungen Z-20 bis Z-22:

Für diese Zusammensetzungen wurde die in Tabelle 8 angegebene Harz-Komponente in der angegebenen Menge (in Gewichtsteilen) als erste Komponente eingesetzt.

Weiterhin wurde die in Tabelle 8 angegebene Härter-Komponente in den angegebenen Mengen (in Gewichtsteilen) als zweite Komponente eingesetzt.

Als weitere dritte Komponente wurde die in Tabelle 8 angegebene Lösung in den angegebenen Mengen (in Gewichtsteilen) eingesetzt.

Die Komponenten jeder Zusammensetzung wurden mittels eines Zentrifugalmischers zu einer homogenen Flüssigkeit verarbeitet und diese unverzüglich folgendermassen geprüft:
**Viskosität, Gelierzeit** und **Shore D** wurden wie für Zusammensetzung **Z-1** beschrieben geprüft.

Weiter wurde ein Film in einer Schichtdicke von 500 µm auf eine Glasplatte aufgezogen und 7 Tage bei 8 °C und 80% relativer Feuchtigkeit gelagert. Dabei wurde 24 Stunden nach der Applikation ein Flaschendeckel aus Polypropylen auf den Film aufgesetzt, unter welchem ein feuchter Schwamm platziert war. Nach weiteren 24 Stunden wurden der Schwamm und der Deckel entfernt und an einer neuen Stelle des Films platziert, wo sie nach 24 Stunden wieder entfernt und neu platziert wurden, insgesamt 4 mal. Anschliessend wurde der Aspekt des Films wie für Zusammensetzung **Z-1 Aspekt (8°/80%)** beschrieben beurteilt.

Die Resultate sind in Tabelle 8 angegeben.

Die mit **"(Ref.)"** bezeichnete Zusamensetzung ist ein Vergleichsbeispiel.

**Tabelle 8: Zusammensetzung und Eigenschaften von Z-20 bis Z-22.**

| **Zusammensetzung** | | **Z-20 (Ref.)** | **Z-21** | **Z-22** |
|---|---|---|---|---|
| **Harz-Komponente** (erste Komp.): | | | | |
| Sikafloor^{®}-264N (A) (RAL 5005) ¹ | | 436.0 | 436.0 | 436.0 |
| **Härter-Komponente** (zweite Komp.): | | | | |
| Sikafloor^{®}-264N (B) ² | | 120.0 | 108.0 | 96.0 |
| **Lösung L-3** (dritte Komponente) | | - | 8.2 | 16.4 |
| Viskosität (5') [Pa·s] | | 2.5 | 3.2 | 4.9 |
| Gelierzeit (h:min) | | 2:55 | 2:25 | 2:05 |
| Shore D | (1d NK) | 45 | 51 | 58 |
| | (2d NK) | 60 | 67 | 69 |
| Shore D | (1d 8°/80%) | 33 | 41 | 53 |
| | (2d 8°/80%) | 57 | 65 | 67 |
| Aspekt (8°/80%) | | schön | schön | schön |
| Blushing | | 2 | 1 | 1 |
| Ring | | kein | kein | kein |

| | | | | |
|---|---|---|---|---|
| ¹ gefüllte pigmentierte Harz-Komponente einer Epoxidharz-Bodenbeschichtung, EEW 436 g/eq (von Sika) ² formulierter ungefüllter Härter für Epoxidharze, AHEW 120 g/eq (von Sika) | | | | |

## Patentansprüche

1. Lösung umfassend 5 bis 65 Gewichts-% bei Raumtemperatur feste Polyphenole und 35 bis 95 Gewichts-% Amine der Formel (I),
R-NH-A-NH₂ (I)
wobei
A für einen linearen oder verzweigten Alkylenrest mit 2 bis 10 C-Atomen steht und
R für einen einwertigen, gegebenenfalls ein Sauerstoffatom enthaltenden Kohlenwasserstoffrest mit 1 bis 12 C-Atomen steht,
wobei das Amin der Formel (I) insgesamt 8 bis 15 C-Atome aufweist und die beiden Stickstoffatome durch mindestens zwei C-Atome voneinander getrennt sind.

2. Lösung gemäss Anspruch 1, **dadurch gekennzeichnet, dass** das bei Raumtemperatur feste Polyphenol ausgewählt ist aus der Gruppe bestehend aus Gallussäure, Diphenolsäure, Resveratrol, Catechin und Phenolgruppen-haltigen Polymeren, insbesondere Phenolharzen.

3. Lösung gemäss einem der Ansprüche 1 oder 2, **dadurch gekennzeichnet, dass** das bei Raumtemperatur feste Polyphenol ein Phenolharz der Formel (II) ist, 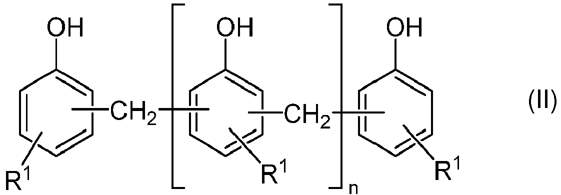 wobei
n im Mittel für einen Wert von 1 bis 45, bevorzugt 1 bis 25, insbesondere 1 bis 8, steht, und
R¹ unabhängig voneinander für H oder einen aliphatischen Kohlenwasserstoffrest mit 1 bis 15 C-Atomen steht, bevorzugt für H, Methyl oder einen linearen aliphatischen C₁₅-Kohlenwasserstoffrest mit keiner, einer, zwei oder drei Doppelbindungen.

4. Lösung gemäss einem der Ansprüche 1 bis 3, **dadurch gekennzeichnet, dass** A ausgewählt ist aus 1,2-Ethylen, 1,2-Propylen, 1,3-Propylen, 1,4-Butylen, 1,3-Butylen, 2-Methyl-1,2-propylen, 1,3-Pentylen, 1,5-Pentylen, 2,2-Dimethyl-1,3-propylen, 1,6-Hexylen, 2-Methyl-1,5-pentylen, 1,7-Heptylen, 1,8-Octylen, 2,5-Dimethyl-1,6-hexylen, 1,9-Nonylen und 1,10-Decylen, insbesondere 1,2-Ethylen.

5. Lösung gemäss einem der Ansprüche 1 bis 4, **dadurch gekennzeichnet, dass** R mindestens einen aromatischen oder aliphatischen Ring enthält und insbesondere ausgewählt ist aus Benzyl, Furfuryl, 2-Phenylethyl, Cyclohexylmethyl und Tetrahydrofurfuryl.

6. Lösung gemäss einem der Ansprüche 1 bis 5, **dadurch gekennzeichnet, dass**
- 5 bis 65 Gewichts-%, bevorzugt 10 bis 50 Gewichts-%, insbesondere 20 bis 45 Gewichts-%, bei Raumtemperatur feste Polyphenole,
- 35 bis 95 Gewichts-%, insbesondere 50 bis 90 Gewichts-%, Amine der Formel (I), und
- 0 bis 30 Gewichts-% weitere Amine, welche nicht der Formel (I) entsprechen, und/oder Verdünner und/oder weitere Beschleuniger
enthalten sind.

7. Lösung gemäss Anspruch 6, **dadurch gekennzeichnet, dass** zusätzlich
- mindestens ein Amin der Formel (la) und/oder ein Amin der Formel (Ib),
R-NH-A-NH-R (Ia)
NH₂-A-NH₂ (Ib)
wobei A und R jeweils für den gleichen Rest wie im entsprechenden Amin der Formel (I) stehen,
- und/oder aminfunktionelle Addukte des Amins der Formel (I) mit mindestens einem Mono- oder Polyepoxid
enthalten sind.

8. Lösung gemäss einem der Ansprüche 1 bis 7, **dadurch gekennzeichnet, dass** die Viskosität bei 20 °C gemessen mittels Kegel-Platten Viskosimeter im Bereich von 0.01 bis 100 Pa·s, mehr bevorzugt 0.02 bis 50 Pa·s, mehr bevorzugt 0.03 bis 20 Pa·s, insbesondere 0.05 bis 10 Pa·s, liegt.

9. Verwendung der Lösung gemäss einem der Ansprüche 1 bis 8 zur Herstellung eines Härters für Epoxidharze, wobei der Härter mindestens ein weiteres Amin mit mindestens drei Aminwasserstoffen enthält.

10. Verwendung gemäss Anspruch 9, **dadurch gekennzeichnet, dass** das weitere Amin mit mindestens drei Aminwasserstoffen ausgewählt ist aus der Gruppe bestehend aus Aminen der Formel (I), 1,5-Diamino-2-methylpentan, 2-Butyl-2-ethyl-1,5-pentandiamin, 2,2(4),4-Trimethyl-1,6-hexandiamin, 1,2-Diaminocyclohexan, 1,3-Bis(aminomethyl)cyclohexan, 1,4-Bis(aminomethyl)cyclohexan, Bis(4-aminocyclohexyl)methan, Isophorondiamin, 2(4)-Methyl-1,3-diaminocyclohexan, 2,5(2,6)-Bis(aminomethyl)bicyclo[2.2.1]heptan, 1,3-Bis-(aminomethyl)benzol, Diethylentriamin, Triethylentetramin, Tetraethylenpentamin, Dipropylentriamin, N-(2-Aminoethyl)-1,3-propandiamin, N,N'-Bis(3-aminopropyl)ethylendiamin, Bis(hexamethylen)triamin, Polyoxypropylendiaminen mit mittlerem Molekulargewicht Mₙ im Bereich von 200 bis 500 g/mol, Polyoxypropylentriaminen mit mittlerem Molekulargewicht Mₙ im Bereich von 300 bis 500 g/mol, 3-(3-(Dimethylamino)propylamino)propylamin, 2,5-Bis-(aminomethyl)furan, 2,5-Bis(aminomethyl)tetrahydrofuran, Bis(5-aminomethylfuran-2-yl)methan, Bis(5-aminomethyltetrahydrofuran-2-yl)methan, 2,2-Bis(5-aminomethylfuran-2-yl)propan, 2,2-Bis(5-aminomethyltetrahydrofuran-2-yl)propan, aminfunktionellen Addukten der genannten Amine mit Mono- oder Polyepoxiden, Phenalkaminen und Mischungen aus zwei oder mehr der genannten Amine.

11. Verwendung gemäss einem der Ansprüche 9 oder 10, **dadurch gekennzeichnet, dass** der Härter 2 bis 30 Gewichts-%, bevorzugt 5 bis 25 Gewichts-%, bei Raumtemperatur feste Polyphenole bezogen auf die Summe aller im Härter enthaltenen flüssigen oder gelösten Bestandteile enthält.

12. Verwendung gemäss einem der Ansprüche 9 bis 11, **dadurch gekennzeichnet, dass** der Härter bezogen auf die Summe aller im Härter enthaltenen flüssigen oder gelösten Bestandteile ein Aminwasserstoff-Equivalentgewicht von 50 bis 140 g/eq, bevorzugt 55 bis 120 g/eq, besonders bevorzugt 60 bis 100 g/eq, insbesondere 65 bis 90 g/eq, aufweist.

13. Verwendung gemäss einem der Ansprüche 9 bis 12, **dadurch gekennzeichnet, dass** der Härter bezogen auf die Summe aller im Härter enthaltenen flüssigen oder gelösten Bestandteile eine Viskosität bei 20 °C gemessen mittels Kegel-Platten Viskosimeter im Bereich von 10 bis 5'000 mPa·s, bevorzugt 10 bis 1'000 mPa·s, besonders bevorzugt 10 bis 500 mPa·s, insbesondere 10 bis 250 m Pa·s, aufweist.

14. Epoxidharz-Zusammensetzung umfassend eine Harz-Komponente enthaltend mindestens ein Epoxidharz und entweder
- eine Härter-Komponente umfassend den Härter wie in einem der Ansprüche 9 bis 13 beschrieben,
oder
- eine Härter-Komponente umfassend mindestens ein Amin mit mindestens drei Aminwasserstoffen und als separate, dritte Komponente die Lösung gemäss einem der Ansprüche 1 bis 8.

15. Ausgehärtete Epoxidharz-Zusammensetzung erhalten aus der Epoxidharz-Zusammensetzung gemäss Anspruch 14 nach dem Vermischen der Komponenten.
